# EUROPÄISCHE PATENTSCHRIFT

(11) **EP 0 797 604 B1**
(45) Veröffentlichungstag und Bekanntmachung des Hinweises auf die Patenterteilung: **08.12.1999**
(21) Anmeldenummer: 95920824.0
(22) Anmeldetag: 17.05.1995
(51) Int. Cl.: C08G 18/12, C08G 18/40, C08G 18/66, C08G 18/08, C09J 175/04

(54) **FEUCHTIGKEITSHÄRTENDER POLYURETHAN-SCHMELZKLEBSTOFF**
HUMIDITY-SETTING POLYURETHANE HOT-MELT-TYPE GLUE
COLLE A FUSION EN POLYURETHANNE DURCISSABLE A L'HUMIDITE

(30) Priorität: 25.05.1994 DE 4418177; 08.02.1995 DE 19504007
(43) Veröffentlichungstag der Anmeldung: 01.10.1997
(73) Patentinhaber: Henkel Kommanditgesellschaft auf Aktien, 40191 Düsseldorf (DE)
(72) Erfinder: KREBS, Michael, D-40724 Hilden (DE); HEIDER, Roland, D-40724 Hilden (DE); SCHILLINGS, Klaus, D-42119 Wuppertal (DE); GANSOW, Michael, Elgin, IL 60123 (US)
(86) Internationale Anmeldenummer: EP9501873
(87) Internationale Veröffentlichungsnummer: WO9532230

(56) Entgegenhaltungen:
- EP-A- 0 381 897
- EP-A- 0 421 154
- EP-A- 0 455 400
- WO-A-94/12552
- DE-A- 4 001 348
- DE-A- 4 011 060
- DE-A- 4 023 801

## Beschreibung

Die Erfindung betrifft einen feuchtigkeitshärtenden Polyurethan-Schmelzklebstoff, seine Herstellung und seine Verwendung in der Schuhindustrie.

Unter "feuchtigkeitshirtendem Polyurethan-Schmelzklebstoff" wird ein weitgehend lösungsmittelfreier Klebstoff mit Urethan-Gruppen verstanden, der bei Raumtemperatur fest ist und nach der Applikation in Form seiner Schmelze nicht nur durch Abkühlen physikalisch bindet, sondern auch durch chemische Reaktion von noch vorhandenen Isocyanatgruppen mit Feuchtigkeit. Erst nach dieser chemischen Aushärtung unter Molekülvergrößerung erhält der Klebstoff seine endgültigen Eigenschaften.

Derartige feuchtigkeitshärtende Polyurethan-Schmelzklebstoffe sind für verschiedene Substrate bekannt:
In der EP 0 421 154 wird ein schnell kristallisierendes, Isocyanatgruppen enthaltendes Polyurethan-System beschrieben, das auf einem Polyesterdiol A mit einem Schmelzpunkt von 30 bis 60 °C und einem Polyesterdiol B mit einem Schmelzpunkt von 65 bis 150 °C sowie einem Polyisocyanat D basiert. Es kann auch noch als Kettenverlängerer ein Diol C mit einem Molekulargewicht von < 400 enthalten. Das Polyurethan-System kann direkt aus diesen Komponenten in einer einzigen Stufe hergestellt werden, aber auch mehrere Stufen sind möglich. Das so erhaltene Polyurethan-System ist teilkristallin und soll als Montage-Klebstoff eingesetzt werden, insbesondere aber als Buchbinder-Klebstoff.
In der DE 32 36 313 wird ein Schmelzklebstoff beschrieben, der aus 20 bis 90 Gew.-% eines prepolymeren Isocyanats und 5 bis 50 Gew.-% eines niedermolekularen Keton-Harzes besteht sowie noch 0 bis 75 Gew.-% eines thermoplastischen Polyurethans enthalten kann. Bei dem prepolymeren Isocyanat handelt es sich um ein reaktives Polyurethanprepolymer aus
1. einem aromatischen Diisocyanat und/oder
2. einem Prepolymeren dieses Isocyanats sowie aus
3. einem Polyether oder einem Polyester mit OH-Gruppen und
4. einem kurzkettigen Diol.
In dem einzigen Herstellungsbeispiel werden neben 516 g eines Polyesterdiols noch 74 g Tripropylenglykol als Kettenverlängerungsmittel zugegeben. Das Prepolymere wird in einer einzigen Stufe aus den Komponenten hergestellt und hat eine Viskosität von 50 bis 40 000 Pa·s bei 20 °C. Der Schmelzklebstoff eignet sich zum Verkleben von thermoplastischen und duroplastischen Kunststoffen, Schaumstoffen, lackierten Oberflächen, Holz- und Holzwerkstoffen, Papier, Leder, Kunstleder, Gummi, Textilien, Non-woven-Materialien und Metallen.
In der EP 0 340 906 wird ein Polyurethan-Schmelzklebstoff beschrieben, der eine Mischung von mindestens 2 amorphen Polyurethan-Prepolymeren enthält, die dem Schmelzklebstoff unterschiedliche Glasumwandlungstemperaturen verleihen. Sie liegen einerseits über und andererseits unter Raumtemperatur. Die Prepolymeren werden aus Polyisocyanaten und unterschiedlichen Diolen hergestellt, nämlich vorzugsweise Polyesterdiolen einerseits und vorzugsweise Polyester-, Polyether- und anderen Polymer-Diolen andererseits. Der Schmelzklebstoff wird entweder durch Mischen der separat hergestellten Prepolymeren hergestellt oder durch die Herstellung des zweiten Prepolymeren in dem ersten. Es werden in der Regel bei Raumtemperatur opake Schmelzklebstoffe erhalten, die nach dem Beispiel eine Viskosität von 91 Pa·s bei 130 °C haben. Der Polyurethan-Schmelzklebstoff wird zum Verkleben von Holz verwendet.

In der EP 0 369 607 wird ein feuchtigkeitshärtender Polyurethan-Schmelzklebstoff beschrieben, der mindestens zwei Polyurethan-Prepolymere enthält, wobei das erste Prepolymer eine Glasumwandlungstemperatur über Raumtemperatur hat und das zweite Prepolymer eine Glasumwandlungstemperatur darunter. Der Schmelzklebstoff wird aus Polyisocyanat und verschiedenen Diolen hergestellt, nämlich aus einem Polyetherdiol einerseits und einem Polyether-, Polyester- oder Polybutadiendiol andererseits. Das Beispiel III enthält 8,5 Gew.-% eines Polyesterdiols. Der Polyurethan-Schmelzklebstoff soll in einer oder in mehreren Stufen hergestellt werden können. In der Regel ist er bei Raumtemperatur transparent und hat gemäß Beispiel I nur eine Glasumwandlungstemperatur. Seine Viskosität liegt entsprechend den Beispielen zwischen 6,8 und 20 Pa·s bei 130 °C. Der Schmelzklebstoff wurde zum Verkleben von Holz, Plastik und Stoff verwendet.
In der EP 0 472 278 wird ein Klebstoff aus einem Polyalkylenetherdiol, einem Polyalkylenethertriol, einem Polyesterpolyol und einem aliphatischen Isocyanat beschrieben. Es handelt sich dabei um einen feuchtigkeitshärtenden Schmelzklebstoff für Stoffe, Holz, Metall, Leder und Plastik.
In der EP 0 242 676 wird ein Verfahren zur Herstellung von aromatenlöslichen, als Lackbindemittel geeigneten, freie Isocyanatgruppen aufweisenden Polyurethanen beschrieben, die durch Umsetzung von Diisocyanaten, Makropolyolen des Molekulargewichtes 500 bis 10 000 und niedermolekularen Polyolen des Molekulargewichtes 62 bis 499 erhalten werden. Bei den letzteren handelt es sich um stark verzweigte Diole wie z.B. 2,2,4-Trimethylpentandiol-1,3, dessen Hydroxylgruppen noch mit ein oder zwei Ethoxy- oder Propoxyeinheiten verethert sein können. Die Polyurethane liegen als Lösung vor und werden als Bindemittel in feuchtigkeitshärtenden Einkomponentenlacken verwendet.

In der EP 0 511 566 wird ein feuchtigkeitshärtender Polyurethan-Schmelzklebstoff beschrieben, der aus a) einer bei Raumtemperatur flüssigen Polyolkomponente mit einem mittleren Molekulargewicht von 500 bis 5 000 und b) einer bei Raumtemperatur kristallinen Polyolkomponente mit einem Molekulargewicht von 500 bis 10 000 sowie einem Gemisch aus einer Polyisocyanat-Komponente mit 2 unterschiedlich reaktiven NCO-Gruppen und einer Diisocyanatkomponente mit einer NCO-Reaktivität gegenüber Hydroxygruppen, die größer ist die der weniger reaktiven NCO-Gruppen der Polyisocyanat-Komponente mit zwei unterschiedlich reaktiven NCO-Gruppen. Die Schmelzklebstoffe werden vorzugsweise zum Verkleben von Glas und Glas-Kunststoff-Verbunden verwendet.
In der EP 0 455 400 wird ein feuchtigkeitshärtender Polyurethan-Schmelzklebstoff beschrieben, der im wesentlichen aus folgender Mischung besteht:
a) 10 bis 90 Gew.-Teile eines ersten Polyurethan-Prepolymeren aus Polyhexamethylenadipat und
b) 90 bis 10 Gew.-Teilen eines zweiten Polyurethan-Prepolymeren aus Polytetramethylenglykol mit einem Molekulargewicht Mn von mindestens 500.
Dieser Schmelzklebstoff eignet sich zum Verkleben von einigen synthetischen Polymeren, Holz, Papier, Leder, Gummi, Textilien einschließlich Non-wovens, und Metallen.

Es ist auch bekannt, feuchtigkeitshärtende Polyurethan-Schmelzklebstoffe in der Schuhindustrie zu verwenden.
So wird in der EP 0 125 008 ein Verfahren zum Verbinden einer Sohle mit einem Schuhoberteil beschrieben. Das Polyurethan wurde aus einem Diisocyanat, einem Hydroxypolyester und einem monofunktionellen Reaktanten hergestellt, wobei der monofunktionelle Reaktant vorzugsweise ein aliphatischer Alkohol mit 4 bis 14 Kohlenstoffatomen und einem Siedepunkt über 100 °C ist. Nach dem Auftrag des Klebstoffs und vor der eigentlichen Verklebung durch Erwärmen und Pressen wird der Klebstoff der Luftfeuchtigkeit ausgesetzt, um die Ketten zu verlängern. Dazu sind 10 bis 15 Minuten bei 80 bis 110 °C und eine Feuchtigkeit, die einem Taupunkt von 40 bis 60 °C entspricht, sowie eine anschließende Behandlung bei atmosphärischer Feuchtigkeit für 10 Minuten bis 18 Stunden notwendig.
Ein weiteres Verfahren zur Befestigung einer Sohle an einem Schuh ist in der EP 0 223 562 beschrieben. Zunächst wird ein feuchtigkeitshärtender lösungsmittelfreier Schmelzklebstoff auf die Sohle und/oder das Schuhobermaterial aufgebracht, dann wird die Klebstoffbeschichtung einer Heißhärtung mit Feuchtigkeit unterzogen, bis schließlich Sohle und Schuhobermaterial zusammengepreßt werden.
In der DE 26 09 266 wird ebenfalls ein Verfahren zum Verbinden von Schuhsohlen mit Schuhoberteilen beschrieben. Der Schmelzklebstoff wurde hergestellt durch Umsetzung eines Diisocyanats mit einem polymeren Polyol mit einem kristallinen Schmelzpunkt im Bereich von 40 bis 90 °C. Nach dem Auftrag des Schmelzklebstoffs wird dieser z.B. mit Wasser in Kontakt gebracht und der so behandelte Überzug dann in einem durch Wärme erweichten Zustand gegen eine damit verträgliche Oberfläche gepreßt.
Schließlich sei auch noch auf die WO 94/12552 hingewiesen. Dort ist von einem Kettenverlängerer keine Rede.

Die bekannten feuchtigkeitshärtenden Polyurethan-Schmelzklebstoffe weisen jedoch gravierende Nachteile bei ihrer Anwendung in der Schuhindustrie auf, die einer wirtschaftlichen Anwendung im breiten Umfang bisher entgegenstanden. Ein geeigneter Klebstoff sollte folgende Eigenschaften aufweisen:
- Der Klebstoff sollte möglichst keine giftigen Stoffe enthalten, insbesondere keine Lösungsmittel.
- Es sollte bei einer Temperatur aufgetragen werden können, die für die Schuhmaterialien nicht zu hoch ist.
- Die zu verbindenden Schuhmaterialien sind vor allem Leder und Gummi.
- Der Klebstoff sollte bei der Applikationstemperatur ein geeignetes Fließverhalten und eine gute Benetzung haben, so daß er problemlos aufgetragen werden kann.
- Die Klebeverbindung sollte von Anfang an eine ausreichende Festigkeit für die weitere Verarbeitung haben. Das gilt insbesondere für die Kriechfestigkeit und die Anfangsfestigkeit, wobei die Aushärtung in angemessener Zeit und möglichst unter Umgebungsbedingungen erfolgen sollte. Das heißt, der Klebstoff sollte innerhalb weniger Minuten so weit abbinden, daß seine Oberfläche nicht mehr klebrig ist, damit beschichtete Sohlen und Schuhoberteile nach dem Abkühlen problemlos gehandhabt und gelagert werden können, ohne daß sie zusammenkleben. Auch sollte die Bindung zwischen der Sohle und dem Schuhoberteil von Anfang an so fest sein, daß sie sich weder sofort noch nach einer Lagerung infolge geringer, aber ständiger Kräfte löst. Es muß also eine ausreichende Anfangsfestigkeit und vor allem eine hohe Kriechfestigkeit innerhalb der Taktzeiten der Schuhproduktion erzielt werden. Wünschenswert ist eine Aushärtung unter normalen Umgebungsbedingungen der Sohlenlagerung (20 ± 5 °C, > ca. 10 % relative Luftfeuchtigkeit) in möglichst 24 Stunden, jedoch spätestens in 7 Tagen.
- Die Klebeverbindung sollte beim Gebrauch ausreichend fest und flexibel sein. Insbesondere ist die Kälteflexibilität von Bedeutung.

Die erfindungsgemäße Aufgabe besteht also darin, einen feuchtigkeitshärtenden Polyurethan-Schmelzklebstoff für die Schuhindustrie bereitzustellen, der mit Maschinen auftragbar ist, die in der Schuhproduktionslinie integriert sind, die keine Vorvernetzung mit Dampf und keine Trocknung in einem Klimakanal enthalten. Dazu müssen sie insbesondere eine hohe Kriechfestigkeit bei ausreichender Anfangsfestigkeit und Endfestigkeit in angemessener Zeit erreichen. Die übrigen Verarbeitungs- und Gebrauchseigenschaften sollten nicht verschlechtert werden. Das gilt insbesondere für die Giftigkeit und Kälteflexibilität.

Die erfindungsgemäße Lösung ist den Patentansprüchen zu entnehmen. Sie besteht in einem feuchtigkeitshärtenden Polyurethan-Schmelzklebstoff der folgende Komponente enthält:
A) mindestens ein Polyurethan-Prepolymer aus
   a) mindestens einem Polyisocyanat,
   b) mindestens einem Polyalkylenglykol in einer Konzentration von mehr als 10 Gew.-%, bezogen auf den Schmelzklebstoff insgesamt,
   c) mindestens einem Polyesterglykol mit einem Molekulargewicht (Mn) zwischen 1 500 und 50 000 und
   d) mindestens einem Kettenverlängerer mit einem Molekulargewicht unter 500 im Falle eines aromatischen und unter 300 im Falle eines aliphatischen Kettenverlängerers sowie
B) gegebenenfalls Zusätzen wie
   d) ein Kohlenwasserstoff-Harz und
   e) einen Stabilisator.

Unter einem "Polyurethan-Prepolymer" ist ein Oligourethan mit Isocyanat-Gruppen zu verstehen, das als Zwischenstufe zu den vernetzten Polyurethanen anzusehen ist. Mit "mindestens" ein Polyurethan-Prepolymer ist gemeint, daß der Klebstoff mindestens ein Maximum in der Verteilungskurve der Molekulargewichte hat. In der Regel entspricht deren Anzahl der Anzahl der separat hergestellten Prepolymere, aus denen sich bei rein physikalischer Mischung der Polyurethan-Schmelzklebstoff ergibt. Die obere Grenze der Anzahl der Prepolymeren liegt also aus Praktikabilitätsgründen bei 3.

Unter einem "Polyisocyanat" ist eine niedermolekulare Verbindung mit 2 oder 3 Isocyanat-Gruppen zu verstehen. Die Diisocyanate werden bevorzugt, sie können aber bis zu ca. 10 Gew.-% an trifunktionellem Isocyanat enthalten. Mit steigendem Gehalt an trifunktionellem Isocyanat ist allerdings mit ungewollten Vernetzungen sowohl bei der Herstellung als auch bei der Verwendung des Schmelzklebstoffs zu rechnen. Neben aliphatischen und cycloaliphatischen Polyisocyanaten kommen vor allem aromatische Polyisocyanate in Frage. Konkrete Beispiele sind: Toluoldiisocyanat, Diphenylmethandiisocyanat und deren Mischungen. Unter Diphenylmethandiisocyanat wird sowohl das 4,4'- als auch das 2,4' sowie das 2,2'-Diphenylmethandiisocyanat und deren Mischungen verstanden. Es werden vorzugsweise ein oder zwei verschiedene Polyisocyanate eingesetzt. Vor allem wird eine Mischung von 2,4'- und 4,4'-Diphenylmethandiisocyanat im Verhältnis von ca. 1/1 verwendet. Seine Mischung mit dem 2,4'-Isomeren beeinflußt unter anderem den Gehalt an nicht umgesetztem Diisocyanat, die thermische Stabilität sowie die Länge der Reaktivierbarkeit des Klebstoff-Films. Der Anteil des Polyisocyanates im Schmelzklebstoff sollte 15 bis 45, vorzugsweise 25 bis 40 Gew.-% betragen.

Unter einem "Polyalkylenglykol" wird ein linearer Polyether mit 2 OH-Gruppen verstanden. Er hat vorzugsweise die allgemeine Formel HO(-R-O)ₘ-H, wobei R ein Kohlenwasserstoffrest mit 2 bis 4 C-Atomen ist. Es kommen auch Copolymere in Frage, und zwar sowohl Blockpolymere als auch statistische Copolymere. Konkrete Polyalkylenglykole sind: Polyethylenglykol, Polytetramethylenglykol und vor allem Polypropylenglykol (R = -CH₂-CH(CH₃)-). Vorzugsweise wird nur eine Art von Polyalkylenglykolen eingesetzt. Es können aber auch Mischungen verwendet werden aus 2 bis 3 Polyalkylenglykolen, die sich in ihrem mittleren Molekulargewicht oder in der Art ihrer Bausteine unterscheiden.

Die Menge des einzusetzenden Polyalkylenglykols - insbesondere des Polypropylenglykols - beträgt mindestens 10 Gew.-%, vorzugsweise 10 bis 70 und insbesondere 15 bis 35 Gew.-%, jeweils bezogen auf den Polyurethan-Schmelzklebstoff insgesamt.

Vor allem ist Polypropylenglykol interessant. Sein mittleres Molekulargewicht sollte in der Regel zwischen 100 und 1 000, insbesondere zwischen 250 und 700, vorzugsweise zwischen 350 und 600 und ganz besonders zwischen 400 und 450 liegen. (Gemeint ist das Zahlenmittel aufgrund von OH-Bestimmungen, wobei die Molekulargewichtsverteilung mehrere Peaks aufweisen kann.) Außerhalb des angegebenen Bereiches tritt eine deutliche Verringerung der positiven Wirkungen ein. Diese liegen unter anderem in der hohen Anfangsfestigkeit (= Festigkeit vor der Härtung), in der hohen Kriechfestigkeit (= Formbeständigkeit unter Einfluß von kleinen aber ständigen Kräften) und in den guten Fließeigenschaften bei den Anwendungstemperaturen.
Für diesen Zweck können unter Umständen auch andere Polymerdiole außerhalb des bevorzugten Bereiches eingesetzt werden, z.B. Polyetheresterdiole (Polyether, die neben den Ether-Gruppen auch noch Ester-Gruppen in geringem Ausmaß enthalten) mit dem gleichen Molekulargewicht und in der gleichen Menge wie Polypropylenglykol.

Unter einem "Polyesterglykol" wird ein Polyester mit 2 OH-Gruppen verstanden, vorzugsweise mit 2 endständigen OH-Gruppen. Sie werden auf bekanntem Wege hergestellt, sei es aus
a) aliphatischen Hydroxycarbonsäuren oder aus
b) aliphatischen Dicarbonsäuren mit 6 bis 12 C-Atomen und - insbesondere geradzähligen - Diolen mit 4 bis 8 C-Atomen.
Natürlich können auch entsprechende Derivate eingesetzt werden, z.B. Lactone, Methylester oder Anhydride. Konkrete Ausgangsprodukte sind: 1,4-Butandiol, 1,6-Hexandiol, Adipin-, Azelain-, Sebazinsäure und Lacton. Die Säurekomponente kann bis zu 25 Mol-% einer anderen Säure enthalten, z.B. Cyclohexandicarbonsäure, Terephthalsäure und Isophthalsäure. Die Glykolkomponente kann bis zu 15 Mol-% eines anderen Diols enthalten, z.B. Diethylenglykol, 1,4-Cyclohexandimethanol. Neben Homopolymeren aus obigen Bausteinen sind vor allem Copolyester aus den folgenden Bausteinen oder deren Derivate wichtig:
1. Adipinsäure, Isophthalsäure, Phthalsäure und Butandiol,
2. Adipinsäure, Phthalsäure und Hexandiol,
3. Adipinsäure, Isophthalsäure, Phthalsäure, Ethylenglykol, Neopentylglykol und 3-Hydroxy-2,2-dimethylpropyl-3-hydroxy-2,2-dimethylpropanoat und
4. Adipinsäure, Phthalsäure, Neopentylglykol und Ethylenglykol. Der bevorzugte Copolyester aus Adipinsäure, Isophthalsäure, Phthalsäure und Butandiol ist teilweise kristallin und hat eine hohe Viskosität. Er führt daher zu hohen Anfangsfestigkeiten. Der Copolyester aus Adipinsäure, Phthalsäure und Hexandiol hat eine niedrige Glasübergangstemperatur und führt daher zu einer verbesserten Kälteflexibilität.
Die Polyesterglykole sind also flüssig oder fest. Wenn sie fest sind, sind sie vorzugsweise amorph oder schwachkristallin. Vorzugsweise wird eine Mischung aus teilweise kristallinen und amorphen Polyestern eingesetzt. Die Kristallinität ist allerdings so wenig ausgeprägt, daß sie sich in dem fertigen Schmelzklebstoff nicht durch Trübung bemerkbar macht. Der Schmelzpunkt der teilkristallinen Polyester liegt im Bereich von 40 bis 120 °C, vorzugsweise im Bereich von 50 bis 95 °C. Der Schmelzpunkt gibt die Temperatur an, bei der die kristallinen Bereiche des Materials schmelzen. Er wird differential-thermoanalytisch bestimmt durch den Endotherm-Hauptpeak. Vorzugsweise wird ein Polyesterglykol auf der Basis von Butanol, Adipinsäure, Isophthalsäure und Phthalsäure mit einem Molekulargewicht von etwa 3 500 und einem Erweichungspunkt von etwa 90 °C als teilweise kristallines Polyesterglykol verwendet.
Das mittlere Molekulargewicht des Polyesterglykols (Mn) liegt zwischen 1 500 und 50 000, vorzugsweise zwischen 2 500 und 6 000. Es wird aus der OH-Zahl berechnet. Das Molekulargewicht des Polyesterglykols ist von gewisser Bedeutung: Mit zunehmendem Molekulargewicht wird die Extrusion des Schmelzklebstoffs und die Penetration in Leder erschwert, mit abnehmendem Molekulargewicht wird der Schmelzklebstoff bei Raumtemperatur nicht genügend fest.
Die Polyesterglykole haben eine Glasumwandlungstemperatur (Tg) im Bereich von vorzugsweise -50 °C bis +50 °C und insbesondere im Bereich von -40 bis +40 °C. Die Tg wird aufgrund von DSC-Messungen mit einer Geschwindigkeit von 10 °C/Min. im zweiten Lauf als Mittelpunkt der Stufe bestimmt.
Zu den besonders geeigneten Polyesterglykolen gehören solche mit einer Glasübergangstemperatur von etwa -40 °C bis 0 °C, mit einer Viskosität von etwa 1 000 bis etwa 30 000 mPa·s bei 130 °C (Brookfield, RVDV II + Thermosel) und mit einer Hydroxylzahl von etwa 20 bis 60.

Vorzugsweise wird ein Gemisch aus 2 bis 6, insbesondere 2 bis 4 Polyesterglykolen mit unterschiedlicher Glasumwandlungstemperatur eingesetzt. Zumindest ein Polyesterglykol sollte eine Glasumwandlungstemperatur im Bereich von -40 bis 0 °C haben, wobei der Anteil dieses Polyesterglykols im Bereich von 10 bis 100 Gew.-%, vorzugsweise von 50 bis 90 Gew.-% liegen, bezogen auf die Gesamtmenge an Polyesterglykol.

Unter "Kettenverlängerer" sind - wie inder PU-Chemie üblich - niedermolekulare Verbindungen mit mehreren - insbesondere zwei - funktionellen Gruppen wie -OH, -SH, -COOH und/oder Amin zu verstehen. Diese Verbindungen sollen jedoch bei der Herstellung des Schmelzklebstoffes eingesetzt werden. Sie können in jeder Phase des Produktionsablaufes hinzugefügt werden, z.B. bei einem Eintopf-Verfahren zusammen mit den übrigen Reaktionspartnern oder auch erst nach Abschluß der Polyisocyanat/Polyol-Umsetzung.
Die Molekulargewichte der Kettenverlängerer liegen im Falle von aromatischen Kettenverlängerern unter 500, bei aliphatischen Kettenverlängerern unter 300, vorzugsweise in beiden Fällen unter 250, insbesondere unter 200. Als konkrete Verbindungen seien beispielhaft genannt:
- aromatische Kettenverlängerer wie 1,4-Bis-(β-hydroxy-ethoxy-)benzol und ethoxyliertes und/oder propoxyliertes Bisphenol A (= 2,2-(4,4'-Dihydroxydiphenyl)-dimethylmethan, Terephthalsäure-bis-glykolester, 1,4-Di(2-hydroxymethyl-mercapto)-2,3,5,6-tetrachlorbenzol,
- übliche gesättigte und ungesättigte Glykole wie Ethylenglykol oder Kondensate des Ethylenglykols, Butandiol-1,3, Butandiol-1,4, Butandiol-2,3, Propandiol-1,2, Propandiol-1,3, Neopentylglykol, Hexandiol-1,6, Bis-hydroxymethyl-cyclohexan, Bernsteinsäure-di-2-hydroxyethylamid, Bernsteinsäure-di-N-methyl-(2-hydroxy-ethyl)amid, 2Methylenpropandiol-(1,3), 2-Methylpropandiol-(1,3), Thiodiglykol,
- aliphatische, cycloaliphatische und aromatische Diamine wie Ethylendiamin, Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan oder die Isomeren des Phenylendiamins. (Aber auch Carbohydrazide oder Hydrazide von Dicarbonsäuren).
- Aminoalkohole wie Ethanolamin, Propanolamin, Butanolamin, N-Methylethanolamin, N-Methyl-isopropanolamin; Diethanolamin, Triethanolamin sowie Di- oder Tri(Alkanolamine) sowie deren Alkoxylierungsprodukte,
- aliphatische, cycloaliphatische, aromatische und heterocyclische Mono- und Diaminocarbonsäuren wie Glycin, 1-und 2-Alanin, 6-Aminocapronsäure, 4-Aminobuttersäure, die isomeren Mono- und Diaminobenzoesäuren, die isomeren Mono- und Diaminonaphtheosäuren und
- Wasser.

Zur Einstellung eines definierten geringen Verzweigungsgrades können auch höherfunktionelle Kettenverlängerer in geringen Mengen eingesetzt werden, wie z.B. Trimethylololpropan oder Glycerin.

Im allgemeinen werden die Kettenverlängerer in Mengen von 0,1 - 16, vorzugsweise 1 - 8 Gew.-% zugegeben. Bei niedrigeren Konzentrationen nimmt der Effekt deutlich ab, bei höheren können unerwünschte Veränderungen bezüglich Haftung und Flexibilität auftreten. Natürlich können auch Mischungen von Kettenverlängerern eingesetzt werden.

Mit dem Zusatz des Kettenverlängerers wird vor allem die Kriechbeständigkeit bei der Sohlenverklebung unmittelbar nach dem Verpressen - also im noch nicht abgebundenen Zustand - verbessert. Der Klebstoff muß nämlich nach dem Fügevorgang elastischen Rückstellkräften standhalten. So wird z.B. die Sohle beim Verpressen verformt und daher wirken auf die Fügenaht und auf den Klebstoff Rückstellkräfte ein. Bei unzureichender Anfangsfestigkeit und Kriechbeständigkeit öffnet sich die Fuge, so daß ein Spalt entsteht. Bei Schuhboden/Sohlen-Konstruktionen mit verdeckter Fügenaht ist dieser Klebefehler nicht unmittelbar sichtbar. Die Verklebung wird in solchen Fällen jedoch durch die Verformung und die Spannungsbelastung während der Aushärtung stark geschwächt. Dieser Nachteil wird durch die Verwendung von Kettenverlängerern verhindert.

Die Kriechfestigkeit des Schmelzklebstoffes (= Formbeständigkeit der Verklebung gegen irreversible Verformung bei Einwirkung geringer Kräfte über längere Zeit) kann durch den Zusatz eines Kohlenwasserstoffharzes verbessert werden. Darunter werden Petroleum-, Kohlenteer- und Terpenharze verstanden. Sie haben im allgemeinen ein Molekulargewicht von weniger als 2 000. Bevorzugte Kohlenwasserstoffharze sind modifizierte aromatische Kohlenwasserstoff-Harze, Terpen-Harze wie z.B. α- und β-Pinen- Polymere, niedermolekulare Polystyrole wie etwa Poly-α-methylstyrol, Kolophoniumester und Cumaron/Inden-Harze. Natürlich wirken diese Stoffe auch als Klebrigmacher.
Ihr Gewichtsanteil am Schmelzklebstoff beträgt 0 bis 20, insbesondere 3 bis 10 Gew.-%.

Mit den Stabilisatoren sind Zusätze gemeint, die die physikalischen Eigenschaften möglichst konstant halten sollen, insbesondere die Schmelzviskosität und die Farbe. Dazu kann mindestens einer der folgenden beispielhaft genannten Stoffe verwendet werden: Phosphorsäure, phosphorige Säure und Toluol-sulfonyl-isocyanat. Zweckmäßigerweise werden 0 bis 0,5, insbesondere 0,01 bis 0,1 Gew.-% des Stabilisators Toluol-sulfonyl-isocyanat zugesetzt.

Zur Beschleunigung der Härtungsreaktion können die bekannten Polyurethan-Katalysatoren zugesetzt werden, z.B. Diorganozinn-Verbindungen wie etwa Dibutylzinn-dilaurat oder eine Mercaptozinn-Verbindung. Ihre Menge reicht von 0 bis 0,15, insbesondere von 0,05 bis 0,1 Gew.-%, bezogen auf das Gewicht des Prepolymers.

Der erfindungsgemäße Schmelzklebstoff wird aus den obigen Komponenten, vorzugsweise folgendermaßen zusammengesetzt:
a) 15 bis 45 Gew.-% an Polyisocyanat,
b) 10 bis 70, insbesondere 15 bis 35 Gew.-% an Polyalkylenglykol,
c) 5 bis 65, insbesondere 20 bis 40 Gew.-% an Polyesterglykol,
d) 0,1 bis 16, vorzugsweise 1 bis 8 Gew.-% an Kettenverlängerern
e) 0 bis 20, insbesondere 3 bis 10 Gew.-% an Kohlenwasserstoff-Harz und
f) 0 bis 0,5, insbesondere 0,01 bis 0,1 Gew.-% an Stabilisator.

Wichtig ist aber nicht nur der Gewichtsbereich der einzelnen Komponenten, sondern auch ihr Gewichtsverhältnis zueinander. So sollte das Verhältnis der reaktiven Gruppen NCO : OH 1,05 : 1 bis 2 : 1 betragen, insbesondere 1,10 : 1 bis 1,5 : 1. Das für eine konkrete Klebstoffzusammensetzung zu wählende NCO : OH-Verhältnis ist so zu wählen, daß der Schmelzklebstoff ein brauchbares Molekulargewicht hat, d.h. es sollte hoch genug sein, um eine gute Anfangsfestigkeit zu ergeben, andererseits aber niedrig genug sein, damit die Viskosität - auch ohne Lösungsmittel - ausreichend niedrig sowohl bei der Herstellung als auch bei der Anwendung ist. Außerdem sollte der Schmelzklebstoff noch mindestens 0,5 bis 3, vorzugsweise 1,0 bis 2 g an freien NCO-Gruppen pro 100 g Schmelzklebstoff haben, um eine ausreichende Härtung mit Feuchtigkeit zu ergeben. Der NCO-Gehalt wird bestimmt durch Titration.

Die Schmelzviskosität des erfindungsgemäßen Polyurethan-Schmelzklebstoffes liegt im allgemeinen im Bereich von 4 bis 100 Pas, vorzugsweise im Bereich von 10 bis 40. Die Schmelzviskosität wird bei 170 °C nach Brookfield gemessen, indem man die Probe 15 min bei 170 °C vorwärmt und anschließend den Wert abliest.

Die Art und die Menge der einzelnen Komponenten ist außerdem auch so zu wählen, daß sie verträglich sind. Ein Anzeichen dafür ist darin zu sehen, daß das Polyurethan-Prepolymer vorzugsweise nur eine Glasumwandlungstemperatur (Tg) im DSC-Diagramm hat. Maßgeblich ist dabei der zweite Lauf bei einer Temperaturerhöhung von 10 °C/Min..

Das Polyurethan-Prepolymer gemäß der Erfindung kann sowohl in einer Stufe als auch in mehreren Stufen hergestellt werden. Bei dem mehrstufigen Verfahren wird z.B. zunächst das Polyisocyanat mit dem Polyalkylenglykol, dem Kettenverlängerer bzw. mit dem Polyesterglykol separat umgesetzt und dann die Umsetzungsprodukte miteinander gemischt. Möglich ist auch die Umsetzung des Polyisocyanats zunächst nur mit dem Polyalkylenglykol, dem Kettenverlängerer oder nur dem Polyesterglykol und die weitere Umsetzung dieses Vorproduktes in Gegenwart aller übrigen Reaktionsteilnehmer.
Vorzugsweise wird jedoch das Polyurethan-Prepolymer gemäß der Erfindung im Einstufenverfahren hergestellt. Dazu werden die Polyester- und Polyalkylenglykole sowie der Kettenverlängerer zunächst gemischt und dann 60 Min. bei 130 °C unter Vakuum dehydratisiert. Dann wird das Polyisocyanat zugesetzt. Das Reaktionsgemisch wird wiederum auf 150 bis 180 °C erwärmt. Wenn kein Katalysator zugesetzt wird, dauert es im allgemeinen ca. 60 Min., bis unter Vakuum die Umsetzung praktisch beendet ist, d.h. OH-Gruppen nicht mehr nachweisbar sind.

Falls die gewünschten Zusätze nicht bereits während der Bildung des Polyurethan-Prepolymers zugesetzt wurden, müssen sie nun zugesetzt und homogenisiert werden.

Da das Polyurethan-Prepolymer reaktive NCO-Gruppen aufweist, ist der Polyurethan-Schmelzklebstoff gegenüber Feuchtigkeit aus der Luft empfindlich. Es ist daher erforderlich, ihn während der Lagerung gegen Feuchtigkeit zu schützen. Dazu wird er zweckmäßigerweise in einem verschlossenen, trockenen und feuchtigkeitsundurchlässigen Behälter aus Aluminium, Weißblech oder Verbundfolien aufbewahrt.

Der erfindungsgemäße Schmelzklebstoff zeichnet sich im wesentlichen durch folgende wertvolle Eigenschaften aus:
- Er enthält kein Lösungsmittel. Die Konzentration des nicht umgesetzten MDIs beträgt weniger als 2,0 %, insbesondere weniger als 1,0 Gew.-%.
- Er ist bei der Lagerung stabil, d.h. es findet keine Entmischung statt. Er ist bei der Auftragungstemperatur von z.B. 170 °C relativ stabil, d.h. die Schmelzviskosität schwankt in einem Bereich von + max. einem Drittel, vorzugsweise einem Fünftel des Ausgangswertes innerhalb von 4 Stunden.
- Er läßt sich bei 110 bis 180°C leicht als frei fließende Schmelze auftragen.
- Selbst bei Ledertypen mit einem hohen Fettgehalt werden gute Klebeergebnisse erzielt. Unter Umständen kann eine Vorbehandlungsmethode eingespart werden, z.B. die Vorbehandlung mit einem Primer.
- Sowohl Gummi als auch Leder werden ausreichend benetzt, und der Schmelzklebstoff dringt sogar relativ tief in faserige Materialien ein.
- Vor der Verfestigung bleibt genügend Zeit zur relativen Positionierung der Fügeteile.
- Beim Abkühlen unter den Umgebungsbedingungen entstehen sofort Bindungen mit einer hohen Anfangsfestigkeit und einer hohen Kriechfestigkeit. Auch sind die Schichten nach der Abkühlung nicht klebrig.
- Innerhalb der üblichen Lagerzeiten für Schuhhalbfabrikate werden annehmbare Festigkeiten erreicht. Die Verklebungen sind außerdem auch bei tiefen Temperaturen flexibel.
- Die Verklebung kann transparent sein, d.h. nicht trüb.
- Die Verklebung ist nach der Aushärtung sehr beständig gegenüber Wasser, Wärme und mechanischer Beanspruchung.
- Die Festigkeiten sind so hoch, daß die in der Schuhindustrie üblichen Taktzeiten eingehalten werden können.

Aufgrund dieser positiven Eigenschaften eignen sich die erfindungsgemäßen Schmelzklebstoffe zur Verklebung vieler Substrate, insbesondere zur Verklebung von fasrigen Materialien wie Holz, Leder oder Textilien, z.B. Geweben oder Nonwovens.

Besonders gute Klebeergebnisse erhält man dabei, wenn der Schmelzklebstoff mit einer Temperatur von 150 °C bis 200 °C, vorzugsweise 170 °C bis 190 °C auf vorgewärmte Substrate aufgetragen wird. Die Oberfläche des Substrates sollte eine Temperatur von 40 bis 180 °C, insbesondere von 60 bis 100 °C haben. Wird z.B. der Klebstoff mit einer Temperatur von 180 °C auf Leder aufgetragen, das auf eine Temperatur von 80 °C vorgeheizt wurde, werden nach Aushärtung des Klebstoffes Schälwerte zwischen 5 und 30 N/mm gemessen. Wird der Klebstoff mit 180 °C auf Leder aufgetragen, welches Raumtemperatur hat, liegen die Schälwerte nur bei 1 bis 5 N/mm, je nach Festigkeit und Faserstruktur des Leders.

Derselbe positive Effekt wird erreicht, wenn das bereits mit dem Klebstoff beschichtete Substrat auf 80 bis 180 °C, vorzugsweise 120 bis 150 °C nachgeheizt wird oder die Erhitzung des Materials parallel zum Klebstoffauftrag erfolgt.
Als Heizquelle kommen insbesondere in Fragen:
IR-Strahlen, Mikrowellen, Kontaktwärme oder heiße Luft und Wasserdampf.

Der positive Effekt wird durch die tiefere Penetration des Schmelzklebstoffes in das offenporige Material und die Verfestigung des Materials durch den Klebstoff nach der Aushärtung erreicht. Als ein weiterer Effekt können bei dieser Methode des Klebstoffgebrauches auch Reaktionen des Schmelzklebstoffes mit freien -OH- oder -NH₂-Gruppen in den faserigen Materialien wie Textil sowie mit dem darin befindlichen Wasser während des Prozesses des Erwärmens auftreten und so zu einer chemischen Verbindung im Material führen.

Daher eignen sich die erfindungsgemäßen Klebstoffe vorzugsweise zur Verwendung in der Schuhindustrie, insbesondere in Auftragsmaschinen, die in die Schuhproduktionslinie integrierbar sind, die keine Vorvernetzungsstufe mit Dampf bzw. Trockenkanal enthält.
Mit "Schuh" ist die äußere Fußbekleidung gemeint, und zwar nicht nur das verkaufsfähige Endprodukt, sondern auch die Zwischenprodukte dafür.
Mit "Sohle" ist die Schuhlauffläche gemeint, wobei die Absätze mit eingeschlossen sind.
Die erfindungsgemäßen Schmelzklebstoffe eignen sich besonders vorteilhaft zum Befestigen von Sohlen an Schuhoberteilen, darüber hinaus aber auch zum Befestigen von unter Spannung stehenden Substraten und zum Verkleben von Leder.
Gegenstand der Erfindung ist daher auch die Verwendung der erfindungsgemäßen Klebstoffe zum Befestigen von Sohlen am Schuhobermaterial, insbesondere aus Leder, und zwar in folgenden Arbeitsschritten:
1. Gegebenenfalls Vorbehandlung der Sohle und/oder des Schuhobermaterials,
2. Auftrag einer Schicht des Schmelzklebstoffes bei 110 bis 180 °C auf mindestens eine der zu befestigenden Flächen, wobei die andere entweder keinen Klebstoff zu enthalten braucht oder aber einen Lösungsmittelklebstoff bzw. einen Dispersionsklebstoff,
3. Zusammenpressen der zu verklebenden Flächen, wobei im Gegensatz zu den sonst üblichen Kontaktklebstoffen um bis zu dem 2- bis 4fachen niedrigere Drücke ausreichend sind, und
4. gegebenenfalls Kühlen der zu verklebenden Fläche, während oder nach dem Pressen.
Vor dem Auftrag des erfindungsgemäßen Schmelzklebstoffes werden die Sohle bzw. das Schuhobermaterial zweckmäßigerweise vorbehandelt. Dabei handelt es sich um bekannte Methoden wie z.B. Aufrauhen, Abwischen mit Lösungsmitteln oder Grundieren mit einem Primer oder Halogenieren von bestimmten Gummikomponenten.
Der Schmelzklebstoff enthält beim Auftragen vorzugsweise kein Lösungsmittel.
Der Klebstoff wird vorzugsweise mit einer Auftragsmaschine in einer Dicke von 0,05 bis 0,7 mm aufgetragen. Nach dem Auftrag einer Schicht des Schmelzklebstoffes und vor dem Zusammenpressen der zu verklebenden Flächen kann der Schmelzklebstoff auch abgekühlt und das vorgefertigte Material gelagert werden, solange eine Aushärtung vermieden wird. Vor dem Zusammenpressen ist dann die Probe wieder zu aktivieren, und zwar durch Erwärmen auf 40 bis 180 °C.

Die Aushärtung kann unter verschiedenen Bedingungen durchgeführt werden. Insbesondere wird sie durch Einwirkung von Feuchtigkeit aus der Luft und/oder den Substraten erreicht. Dazu sollte die relative Luftfeuchtigkeit mehr als 25 % bei 20 °C betragen. Unter diesen Bedingungen dauert die Aushärtung mindestens 24 Stunden. Die Umgebungsbedingungen können allerdings auch schwanken, z.B. im Bereich von 20 ± 5 °C. Die relative Luftfeuchtigkeit sollte allerdings nicht weniger als 10 % betragen, um in einem Zeitraum von 3 bis 7 Tagen zu einer Aushärtung zu kommen. Die Feuchtigkeit kann auch. gemäß der DE 39 42 616 aufgebracht werden.

Bei der Verwendung des erfindungsgemäßen Schmelzklebstoffes in der Schuhindustrie ergeben sich folgende Vorteile:
- Er ermöglicht ein System, welches ohne weiteres in die Produktionslinie integrierbar ist, d.h. ohne den Produktionsablauf zu verzögern und ohne zusätzlichen Aufwand an Maschinen und Energie.
- Aufgrund der hohen Kriech- und Anfangsfestigkeit sowie der nicht erforderlichen Trockenzeiten ermöglicht er eine deutlich höhere Produktivität.
- Die Festigkeit der Verklebungen mit Leder ist wesentlich höher als bisher.
- Unter Umständen reicht ein einseitiger Auftrag auf das Obermaterial, z.B. beim Verkleben von PU-Sohlen.

Gegenstand der Erfindung sind daher auch die unter Verwendung des erfindungsgemäßen Klebstoffes hergestellten Schuhe.

Die Erfindung wird nun anhand von Beispielen im einzelnen erläutert.

### Beispiele

### A) Ausgangsstoffe:

Polyester A ist ein teilweise kristallines Copolyester-Glykol aus Isophthalsäure, Butandiol, Phthalsäuredimethylester und Adipinsäure. Polyester A besitzt ein Molekulargewicht von etwa 3500, eine Hydroxyl-Zahl von 27 bis 34, bestimmt nach DIN 53 240, eine Glasübergangstemperatur von etwa -20 °C, bestimmt mittels DSC, und eine Viskosität bei 100 °C von etwa 30 000 mPa·s und bei 130 °C von etwa 5000 mPa·s, bestimmt mit einem Brookfield-Viskosimeter (LVT4).

Polyester B ist ein teilweise kristallines Copolyester-Glykol aus Phthalsäuredimethylester, Adipinsäure und Hexandiol. Es besitzt ein Molekulargewicht von etwa 3500, eine Hydroxyl-Zahl von 27 bis 34, bestimmt nach DIN 53 240, eine Glasübergangstemperatur von etwa -40 °C, bestimmt mittels DSC, und eine Viskosität bei 130 °C von etwa 3000 mPa·s, bestimmt mit einem Brookfield-Viskosimeter (LVT4).

Polyester C ist ein festes amorphes Copolyester-Glykol aus Isophthalsäure, Neopentylglykol, Ethylenglykol, Adipinsäure, Phthalsäure und 3-Hydroxy-2,2-dimethylpropyl-3-hydroxy-2,2-dimethylpropanoat. Es besitzt ein Molekulargewicht von etwa 3500, eine Hydroxyl-Zahl von 31-39, bestimmt nach DIN 53 240, eine Glasübergangstemperatur von etwa +30 °C, bestimmt mittels DSC, und eine Viskosität bei 130 °C von etwa 30 000 mPa·s, bestimmt mit einem Brookfield-Viskosimeter (LVT4).

Polyester I ist ein festes amorphes Copolyester-Glykol mit einem Molekulargewicht von etwa 3500, einer Hydroxyl-Zahl von 27-34, bestimmt nach DIN 53 240, einer Glasübergangstemperatur von etwa 20°C, bestimmt mittels DSC, und einer Viskosität bei 130°C von etwa 7000 mPa·s, bestimmt mit einem Brookfield-Viskosimeter (LVT4). Die Polyester-Materialien sind im Handel zu beziehen durch Hüls AG, Troisdorf, Deutschland.

Das Polypropylenglykol besitzt ein Molekulargewicht von etwa 425 und ist erhältlich bei Miles Inc., Pittsburgh, PA.

Das Isomerengemisch aus Diphenylmethan-2,4'- und Diphenylmethan-4,4'-diisocyanat (MDI) ist erhältlich bei Miles Inc., Pittsburgh.

### B) Herstellung

Bei dem folgenden Beispiel wurde der Polyurethan-Klebstoffe hergestellt durch etwa 60minütiges Dehydratisieren der angegebenen Mengen an Butandiol-1,4, Polyesterglykol-Mischung und Polypropylenglykol bei einer Temperatur von 130 °C unter Vakuum. Anschließend wurde die Mischung mit der angegebenen Menge des Diphenylmethan-isocyanat (MDI) versetzt und bei einer Temperatur von etwa 170 °C unter Vakuum etwa 60 Min. lang umgesetzt. Im Anschluß an die Reaktion wurde das Prepolymer in einen feuchtigkeitsdichten Behälter gegeben.

### Zusammensetzung:

1150 g Polypropylenglykol
92 g Butandiol-1,4
575 g Polyesterdiol A
115 g Polyesterdiol B
115 g Polyesterdiol C
115 g Polyesterdiol I
1244 g MDI-Isomerengemisch

### C) Untersuchung

Die Viskosität wurde mit einem Brookfield Thermocell-Viskosimeter gemessen: Nach 15minütigem Erwärmen eines Röhrchens mit der Polyurethan-Schmelze auf die angegebenen Temperaturen wurde der Wert abgelesen. Die Schmelzstabilität der Polyurethan-Schmelze wurde durch Messen der Viskositätszunahme im Laufe von 2 Stunden bei 170 °C bestimmt. Nach 0 Min. wurde 18,3 Pas erhalten, nach 30 Min. 10,6, nach 60 Min. 10,8 und nach 120 Min. 11,5.

## Patentansprüche

1. Feuchtigkeitshärtender Polyurethan-Schmelzklebstoff, enthaltend
A) mindestens ein Polyurethan-Prepolymer aus
a) mindestens einem Polyisocyanat,
b) mindestens einem Polyalkylenglykol in einer Konzentration von mehr als 10 Gew.-%, bezogen auf den Schmelzklebstoff insgesamt,
c) mindestens einem Polyesterglykol mit einem Molekulargewicht (Mn) zwischen 1 500 und 50 000 und
d) mindestens einem Kettenverlängerer mit einem Molekulargewicht unter 500 im Falle eines aromatischen und unter 300 im Falle eines aliphatischen Kettenverlängerers sowie
B) gegebenenfalls Zusätzen wie
e) ein Kohlenwasserstoff-Harz und
f) einen Stabilisator.

2. Schmelzklebstoff nach Anspruch 1 mit folgender Zusammensetzung:
a) 15 bis 45 Gew.-% an Polyisocyanat,
b) 10 bis 70, insbesondere 15 bis 35 Gew.-% an Polyalkylenglykol,
c) 5 bis 65, insbesondere 20 bis 40 Gew.-% an Polyesterglykol,
d) 0,1 bis 16, insbesondere 1 bis 8 Gew.-% an Kettenverlängerer
e) 0 bis 20, insbesondere 3 bis 10 Gew.-% an Harz und
f) 0 bis 0,5, insbesondere 0,01 bis 0,1 Gew.-% an Stabilisator.

3. Schmelzklebstoff nach Anspruch 1 oder 2, dadurch gekennzeichnet, daß das Polyisocyanat ein aromatisches Diisocyanat ist, insbesondere ein Diisocyanat, ausgesucht aus der Gruppe Toluoldiisocyanat, 4,4'-Diphenylmethandiisocyanat und 2,4'-Diphenylmethandiisocyanat sowie deren Mischungen.

4. Schmelzklebstoff nach Anspruch 1, 2 oder 3, dadurch gekennzeichnet, daß das Polyalkylenglykol ein Polypropylenglykol ist,
das ein Molekulargewicht von 100 bis 1 000, insbesondere 250 bis 700 und vorzugsweise zwischen 350 und 600 hat.

5. Schmelzklebstoff nach mindestens einem der Ansprüche 1 bis 4, gekennzeichnet durch mindestens 1 Polyesterglykol mit einer Glasumwandlungstemperatur nach DSC-Messungen (Tg) von -40 bis 0 °C.

6. Schmelzklebstoff nach mindestens einem der Ansprüche 1 bis 5, gekennzeichnet durch mindestens 2 Polyesterglykole mit unterschiedlicher Glasumwandlungstemperatur nach DSC-Messungen (Tg).

7. Schmelzklebstoff nach Anspruch 6, dadurch gekennzeichnet, daß die Glasumwandlungstemperaturen des Polyestergemisches im Bereich von -50 bis +50°C, insbesondere von -40 bis +40°C liegen, wobei eine Glasumwandlungstemperatur unter und eine über 0 °C liegt.

8. Schmelzklebstoff nach mindestens einem der Ansprüche 1 bis 7, dadurch gekennzeichnet, daß die Molekulargewichte der Polyesterglykole zwischen 2 500 und 6 000, und daß die Polyesterglykole flüssig, amorph und/oder schwach kristallin sind.

9. Schmelzklebstoff nach mindestens einem der Ansprüche 1 bis 8, dadurch gekennzeichnet, daß der Kettenverlängerer eine Verbindung mit mehreren funktionellen Gruppen wie -OH, -SH und/oder Amin eingesetzt wird, wobei der bevorzugte Kettenverlängerer ein Diol ist.

10. Schmelzklebstoff nach mindestens einem der vorangegangenen Ansprüche, dadurch gekennzeichnet, daß das Harz e) ein modifiziertes aromatisches Kohlenwasserstoff-Harz oder Terpen-Kohlenwasserstoff-Harz ist.

11. Schmelzklebstoff nach mindestens einem der vorangegangenen Ansprüche, dadurch gekennzeichnet, daß der Stabilisator f) Toluolsulfonyl-lsocyanat ist.

12. Schmelzklebstoff nach mindestens einem der vorangegangenen Ansprüche, dadurch gekennzeichnet, daß das PU-Prepolymer im DSC-Diagramm nur eine Tg hat.

13. Schmelzklebstoff nach mindestens einem der vorangegangenen Ansprüche, dadurch gekennzeichnet, daß er eine Schmelzviskosität im Bereich von 4 bis 100, vorzugsweise von 10 bis 40 Pas bei 170 °C hat.

14. Herstellung des Schmelzklebstoffes nach mindestens einem der vorangegangenen Ansprüche im Ein- oder Mehrstufenverfahren, insbesondere im Einstufenverfahren.

15. Verwendung des Schmelzklebstoffes nach mindestens einem der vorangegangenen Ansprüche zum Verkleben von offenporigen Materialien wie Holz, Leder oder Textilien, z.B. Geweben oder Nonwovens.

16. Verwendung des Schmelzklebstoffes nach mindestens einem der Ansprüche, dadurch gekennzeichnet, daß man die Substrate vor, bei oder nach dem Klebstoffauftrag erwärmt.

17. Verwendung des Schmelzklebstoffes nach Anspruch 16, dadurch gekennzeichnet, daß man die Substratoberfläche vor dem Auftrag des Schmelzklebstoffes auf 40 bis 180 °C, insbesondere auf 60 bis 100 °C erwärmt.

18. Verwendung des Schmelzklebstoffes nach Anspruch 16 oder 17, dadurch gekennzeichnet, daß man die Substratoberfläche bei oder nach dem Schmelzstoffauftrag auf 80 bis 180, vorzugsweise auf 120 bis 150 °C erwärmt.

19. Verwendung des Schmelzklebstoffs nach mindestens einem der vorangegangenen Ansprüche in der Schuhindustrie, insbesondere in Auftragsmaschinen, die in die Schuhproduktionslinie integrierbar sind, die keine Vorvernetzungsstufe mit Dampf bzw. keinen Trockenkanal enthält.

20. Verwendung nach Anspruch 19, dadurch gekennzeichnet, daß der Schmelzklebstoff zur Befestigung von Sohlen am Schuhobermaterial, welches insbesondere aus fasrigem Material wie Leder oder Textil besteht, verwendet wird, und zwar in folgenden Arbeitsschritten:
1. Gegebenenfalls Vorbehandlung der Sohle und/oder des Schuhobermaterials, z.B. durch Aufrauhen, Grundieren, Halogenieren, Abwischen mit Lösungsmitteln usw..
2. Auftrag einer Schicht des Schmelzklebstoffes bei 110 bis 180 °C auf mindestens eine der zu befestigenden Flächen, wobei die andere entweder keinen Klebstoff zu enthalten braucht oder aber einen Lösungsmittelklebstoff bzw. einen Dispersionsklebstoff,
3. Zusammenpressen der zu verklebenden Flächen und
4. gegebenenfalls Kühlen der zu verklebenden Fläche während oder nach der Verklebung.

## Claims

1. A moisture-curing polyurethane hotmelt adhesive containing
A) at least one polyurethane prepolymer of
a) at least one polyisocyanate,
b) at least one polyalkylene glycol in a concentration of more than 10% by weight, based on the hotmelt adhesive as a whole,
c) at least one polyester glycol with a molecular weight (Mn) of 1,500 to 50,000 and
d) at least one chain extender with a molecular weight below 500 in the case of an aromatic chain extender and below 300 in the case of an aliphatic chain extender and
B) optionally additives, such as
e) a hydrocarbon resin and
f) a stabilizer.

2. A hotmelt adhesive as claimed in claim 1 with the following composition:
a) 15 to 45% by weight of polyisocyanate,
b) 10 to 70% by weight and, more particularly, 15 to 35% by weight of polyalkylene glycol,
c) 5 to 65% by weight and, more particularly, 20 to 40% by weight of polyester glycol,
d) 0.1 to 16% by weight and, more particularly, 1 to 8% by weight of chain extender,
e) 0 to 20% by weight and, more particularly, 3 to 10% by weight of resin and
f) 0 to 0.5% by weight and, more particularly, 0.01 to 0.1% by weight of stabilizer.

3. A hotmelt adhesive as claimed in claim 1 or 2, characterized in that the polyisocyanate is an aromatic diisocyanate, more particularly a diisocyanate selected from the group consisting of toluene diisocyanate, 4,4'-diphenyl methane diisocyanate and 2,4'-diphenyl methane diisocyanate and mixtures thereof.

4. A hotmelt adhesive as claimed in claim 1, 2 or 3, characterized in that the polyalkylene glycol is a polypropylene glycol which has a molecular weight of 100 to 1,000, more particularly 250 to 700 and preferably 350 to 600.

5. A hotmelt adhesive as claimed in any of claims 1 to 4, characterized by at least one polyester glycol with a glass transition temperature (Tg), as measured by DSC, of -40 to 0°C.

6. A hotmelt adhesive as claimed in at least one of claims 1 to 5, characterized by at least two polyester glycols with different glass transition temperatures (Tg), as measured by DSC.

7. A hotmelt adhesive as claimed in claim 6, characterized in that the glass transition temperatures of the polyester mixture are in the range from -50 to +50°C and, more particularly, from -40 to +40°C, one glass transition temperature being below 0°C and the other above 0°C.

8. A hotmelt adhesive as claimed in at least one of claims 1 to 7, characterized in that the molecular weights of the polyester glycols are between 2,500 and 6,000 and in that the polyester glycols are liquid, amorphous and/or weakly crystalline.

9. A hotmelt adhesive as claimed in at least one of claims 1 to 8, characterized in that the chain extender is a compound containing several functional groups, such as -OH, -SH and/or amine, the preferred chain extender being a diol.

10. A hotmelt adhesive as claimed in at least one of the preceding claims, characterized in that the resin e) is a modified aromatic hydrocarbon resin or terpene hydrocarbon resin.

11. A hotmelt adhesive as claimed in at least one of the preceding claims, characterized in that the stabilizer f) is toluene sulfonyl isocyanate.

12. A hotmelt adhesive as claimed in at least one of the preceding claims, characterized in that the PU prepolymer has only one Tg in the DSC curve.

13. A hotmelt adhesive as claimed in at least one of the preceding claims, characterized in that it has a melt viscosity of 4 to 100 and preferably 10 to 40 Pa·s at 170°C.

14. The production of the hotmelt adhesive claimed in at least one of the preceding claims by a single-stage or multistage process, more particularly by a single-stage process.

15. The use of the hotmelt adhesive claimed in at least one of the preceding claims for bonding open-pore materials, such as wood, leather or textiles, for example woven fabrics or nonwovens.

16. The use of the hotmelt adhesive claimed in at least one of the preceding claims, characterized in that the substrates are heated before, during or after application of the adhesive.

17. The use of the hotmelt adhesive claimed in claim 16, characterized in that the surface of the substrate is heated to a temperature of 40 to 180°C and, more particularly, to a temperature of 60 to 100°C before application of the hotmelt adhesive.

18. The use of the hotmelt adhesive claimed in claim 16 or 17, characterized in that the surface of the substrate is heated to a temperature of 80 to 180°C and preferably to a temperature of 120 to 150°C during or after application of the hotmelt adhesive.

19. The use of the hotmelt adhesive claimed in at least one of the preceding claims in the shoe industry, more particularly in application machines designed for integration in the shoe production line which does not contain a steam-operated preliminary crosslinking stage or a drying tunnel.

20. The use claimed in claim 19, characterized in that the hotmelt adhesive is used to fix soles to shoe upper material consisting in particular of a fibrous material, such as leather or textile, in the following working steps:
1. optionally pretreatment of the sole and/or shoe upper material, for example by roughening, priming, halogenation, wiping with solvents, etc.;
2. application of a layer of the hotmelt adhesive at 110 to 180°C to at least one of the surfaces to be joined; the other surface either does not have to contain any adhesive or may contain a solvent-based adhesive or a dispersion adhesive;
3. pressing together of the surfaces to be joined and
4. optionally cooling of the surface to be joined during or after bonding.

## Revendications

1. Colle à fusion en polyuréthane durcissable à l'humidité contenant :
A) au moins un prépolymère polyuréthane, constitué de :
a) au moins un polyisocyanate,
b) au moins un polyalkylène glycol en une concentration supérieure à 10 % en poids, par rapport à la colle à fusion prise globalement,
c) au moins un polyester glycol d'un poids moléculaire (Mn) compris entre 1.500 et 50.000, et
d) au moins un prolongateur de chaîne ayant un poids moléculaire, inférieur à 500 dans le cas d'un prolongateur de chaîne aromatique, et inférieur à 300 dans le cas d'un prolongateur de chaîne aliphatique ainsi que
B) le cas échéant des adjuvants tels que
e) une résine d'hydrocarbure et, et
f) un stabilisateur.

2. Colle à fusion selon la revendication 1,
présentant la composition suivante :
a) 15 à 45 % en poids de polyisocyanate,
b) 10 à 70, en particulier 15 à 35 % en poids de polyalkylène glycol,
c) 5 à 65, en particulier 20 à 40 % en poids de polyester glycol,
d) 0, 1 à 16, en particulier 1 à 8 % en poids de prolongateur de chaîne,
e) 0 à 20, en particulier 3 à 10 % en poids de résine, et
f) 0 à 0,5, en particulier 0,01 à 0,1 % en poids de stabilisateur.

3. Colle à fusion selon la revendication 1 ou 2,
caractérisée en ce que
le polyisocyanate est un diisocyanate aromatique, en particulier un diisocyanate du groupe composé de diisocyanate de toluène, 4,4 diphénylméthanediisocyanate et 2,4'-diphenylméthandiisocyanate, ainsi que leurs mélanges.

4. Colle à fusion selon la revendication 1, 2 ou 3,
caractérisée en ce que
le polyalkylène glycol est un polypropylène glycol, ayant un poids moléculaire de 100 à 1000, en particulier de 250 à 700 et, de préférence, entre 350 et 600.

5. Colle à fusion selon au moins l'une des revendications 1 à 4,
caractérisée par
au moins 1 polyéthylène glycol d'une température de transformation vitreuse, selon les mesures DSC, (Tg) de -40 à 0°C.

6. Colle à fusion selon au moins l'une des revendications 1 à 5,
caractérisée par
au moins deux polyester glycols, ayant une température de transformation vitreuse différente, selon des mesures DSC (Tg).

7. Colle à fusion selon la revendication 6,
caractérisée en ce que
les températures de transformation vitreuse du mélange du polyester sont fixées dans la plage de -50 à +50°C, en particulier de -40 à +40°C, une température de transformation vitreuse étant située au-dessous de 0°C et l'autre au-dessus.

8. Colle à fusion selon l'une des revendications 1 à 7,
caractérisée en ce que
les poids moléculaires des esters glycol sont compris entre 2500 et 6000 et en ce que les polyester glycols sont liquides amorphes et/ou faiblement cristallins.

9. Colle à fusion selon au moins l'une des revendications 1 à 8,
caractérisée en ce que
le prolongateur de chaîne utilisé est une combinaison avec plusieurs groupes fonctionnels tels que -OH, -SH et/ou amine, le prolongateur de chaîne préféré étant un diol.

10. Colle à fusion selon au moins l'une des revendications précédentes,
caractérisée en ce que
la résine e) est une résine d'hydrocarbure aromatique modifiée, ou une résine d'hydrocarbure de terpène.

11. Colle à fusion selon au moins l'une des revendications précédentes,
caractérisée en ce que
le stabilisateur f) est un isocyanate de toluène sulfonyl.

12. Colle à fusion selon au moins l'une des revendications précédentes,
caractérisée en ce que
le prépolymère PU à une seule température Tg dans le diagramme DSC.

13. Colle à fusion selon au moins l'une des revendications précédentes,
caractérisée en ce qu'
il a une viscosité en fusion dans la plage de 4 à 100, de préférence de 10 à 40 Pas à 170°C.

14. Fabrication de colle à fusion selon au moins l'une des revendications précédentes, dans un procédé à une ou plusieurs étapes en particulier un procédé à une étape.

15. Utilisation de la colle à fusion selon au moins l'une des revendications précédentes, pour le collage de matériaux à pores ouverts tels que du bois, du cuir ou des textiles, par exemple des tissus ou des non-tissés.

16. Utilisation de la colle à fusion selon au moins l'une des revendications précédentes,
caractérisée en ce qu'
on chauffe le substrat avant, lors de, ou après l'application de la colle.

17. Utilisation de la colle à fusion selon la revendication 16,
caractérisée en ce qu'
on chauffe la surface du substrat avant application de la colle à fusion, à une température de 40 à 180°C, en particulier à 60 à 100°C.

18. Utilisation de la colle à fusion selon la revendication 16 ou 17,
caractérisée en ce qu'
on chauffe la surface du substrat lors de, ou après l'application de colle à fusion, à une température de 80°C à 180°C, de préférence de 120 à 150°C.

19. Utilisation de la colle à fusion selon au moins l'une des revendications précédentes, dans l'industrie de la chaussure, en particulier dans les machines applicatrices, qui sont intégrables dans la ligne de production de chaussure, ne contenant aucun étage de pré-réticulation à la vapeur ni aucun canal de séchage.

20. Utilisation de la colle à fusion selon la revendication 19,
caractérisée en ce que
l'adhésif à fusion est utilisé pour la fixation de semelles sur un matériau de dessus de chaussure qui, en particulier, est constitué de matériaux fibreux tels que du cuir ou du textile, et précisément en suivant les étapes opératoires ci-après :
1. le cas échéant prétraitement de la semelle et/ou du matériau de dessus de la chaussure, par exemple par augmentation de la rugosité, application d'apprêt, halogénation, essuyage avec des solvants etc.
2. Application d'une couche de la colle à fusion à une température de 110 à 180°C sur au moins l'une des surfaces à fixer, l'autre devant soit ne contenir aucun adhésif, soit contenir un adhésif à solvant ou un adhésif à dispersion.
3. Pressage à l'état assemblé des surfaces à coller, et
4. Le cas échéant, refroidissement de la surface à coller pendant ou après le collage.
